# EUROPEAN PATENT APPLICATION

(11) **EP 1 067 302 A1**
(43) Date of publication of application: **10.01.2001**
(21) Application number: 00112576.4
(22) Date of filing: 14.06.2000
(51) Int. Cl.: F16C 35/06, G11B 5/53

(54) **Systems for recording and/or playing magnetic tapes equipped with drum assemblies, drum assemblies and methods for assembling such products**

(30) Priority: 21.06.1999 FR 9907826
(71) Applicant: THOMSON multimedia, 92100 Boulogne Billancourt (FR)
(72) Inventor: Berthaud, Philippe, Thomson multimedia, 92100 Boulogne Billancourt (FR); Kramarz, Roger, Thomson multimedia, 92100 Boulogne Billancourt (FR)
(74) Representative: Bonnans, Arnaud

(57) **Abstract**

The present invention relates to a system for recording and/or playing magnetic tapes comprising a drum assembly. The drum assembly comprises a static drum (1) and a rotary drum (2). One of the drums (2) is secured to a spindle (3). The spindle (3) is mounted on the other drum (1) with the interposition of at least one ball bearing (8, 9).

Preloading means are provided for axially immobilizing the rolling bearing (8, 9) with preload relative to the spindle (3). The preloading means comprise an elastic ring (20) mounted under tension on the spindle (3) so that contact between the elastic ring (20) and the spindle (3) generates friction forces which maintain the preload.

The present invention also provides a method for assembling such a system.

## Description

The present invention relates to drum assemblies (generally known simply as drums) for systems for recording and/or playing magnetic tapes and to systems for recording and/or playing magnetic tapes equipped with such drum assemblies.

A system for recording and/or playing magnetic tapes, such as a video player/recorder, for example, generally comprises a drum assembly which bears read and/or write heads. In operation, the magnetic tape is in contact with the drum assembly over at least half its periphery.

Conventionally, as depicted in Figure 1 and described in greater detail, for example, in patent application FR 2,716,997, a drum assembly comprises a static drum (or lower drum) 1 and a rotary drum (or upper drum) 2.

The rotary drum 2 bears a collection of read and/or write heads 6 which are in contact with a magnetic tape (not depicted) in operation. The signals present on the read and/or write heads 6 are respectively transmitted towards or received from an electronic circuit 7 located in the static drum 1 by means of a rotary transformer 5.

The rotary drum 2 is mounted securely on a spindle 3, which is mounted on the static drum via two ball bearings 8, 9 and is driven in rotation by the rotor 4 of a motor.

To reduce the play in the bearings as explained in patent application FR 2,754,627, use is currently made of a rigid preloading ring 10 fixed relative to the spindle 3 by means of a screw 11 housed in a bore 12 perpendicular to the spindle 3. The solution proposed in the abstract of the Japanese patent application published with the number 06 215 340 makes use of a rigid ring (referenced 8 in that document).

A rigid ring 10 such as this is relatively expensive because it is made by machining brass or aluminium. Furthermore, mounting it on the spindle is complicated because the screw 11 has first of all to be mounted on the rigid ring 10 and then the rigid ring 10 has to be mounted on the spindle 3 and orientated before the screw 11 is finally tightened; the use of a rigid ring such as this therefore also proves to be expensive because of the way in which it is mounted.

The invention therefore sets out to provide an economical and easy-to-implement solution for preloading the ball bearings to allow the rotary drum to rotate with respect to the static drum in a drum assembly, particularly for a system for recording and/or playing magnetic tapes.

To this end, the invention provides a drum assembly, particularly for a system for recording and/or playing magnetic tapes, comprising a static drum and a rotary drum, one of the drums being secured to a spindle, the spindle being mounted on the other drum with the interposition of at least one ball bearing, preloading means being provided for axially immobilizing the bearing with preload relative to the spindle in which the preloading means comprise an elastic ring.

The elastic ring is mounted under tension on the spindle in such a way that contact between the elastic ring and the spindle generates frictional forces which maintain the preload.

Advantageously, the elastic ring has two tabs between which a diametral passage between the inside and the outside of the elastic ring is formed.

A drum assembly such as this may be assembled using a method which comprises the following steps:
- the tabs are forced apart until the distance between them is greater than the diameter of the spindle;
- the elastic ring is placed around the spindle, the tabs being kept apart;
- the elastic ring is brought into contact with the rolling bearing with a preloading force, the tabs being kept apart;
- the tabs are released, with the preloading force maintained.

As a preference, the spindle is a straight cylinder. Its cost is thus reduced to a minimum.

According to a particularly advantageous construction, the static drum has a recess through which the spindle passes and the rolling bearing is housed in a bore consisting of a widening of the recess.

The invention also provides a system for recording and/or playing magnetic tapes comprising such a drum assembly.

The invention will now be described with the aid of some embodiments which are taken by way of non-limiting examples, with reference to the appended drawings, in which:

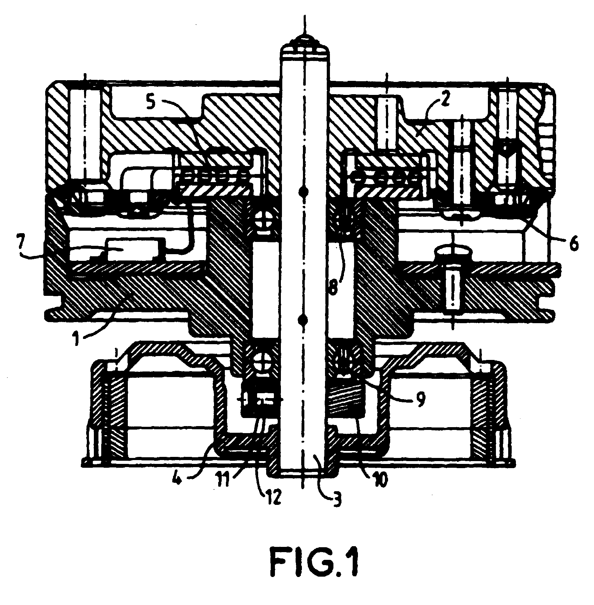

- Figure 1 depicts a conventional drum assembly as described hereinabove;
- Figure 2 depicts a drum assembly according to a first embodiment of the invention;
- Figures 3a and 3b depict the elastic ring of the drum assembly of Figure 2, in detail;
- Figures 4a and 4b depict another embodiment of the elastic ring.

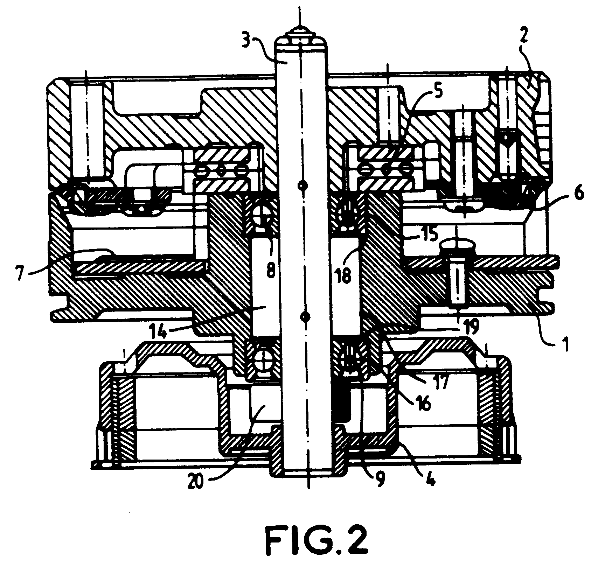

A system for recording and/or playing according to the invention, comprises a drum assembly as depicted in Figure 2, which in operation allows data to be written to or read from a moving magnetic tape (not depicted).

The drum assembly comprises a static drum (or lower drum) 1 and a rotary drum (or upper drum) 2.

The rotary drum 2 carries a set of read and/or write heads 6. The signals present on the read and/or write heads 6 are respectively transmitted to or received from an electronic circuit 7 located in the static drum 1 via a rotary transformer 5.

The rotary drum 2 is mounted securely on a spindle 3 which is mounted on the static drum 1 with the interposition of two ball bearings 8, 9 and is driven in rotation by the rotor 4 of a motor.

More specifically, the way in which the spindle 3 is mounted on the static drum 1 via the bearings 8, 9 is as follows.

The static drum 1 takes the spindle 3 through a recess 14 of cylindrical overall shape. At each end of the recess 14 there is a bore 15, 16, each bore consisting of a widening of the diameter of the recess 14. The upper bore 15 opens into that face of the static drum which faces towards the rotary drum 2; the lower bore 16 opens into that face of the static drum which faces towards the rotor 4.

Between the two bores 15, 16, the recess 14 has a cylindrical part 17, the diameter of which is smaller than that of the bores 15, 16.

The upper bore 15 houses a first rolling bearing 8; the lower bore 16 houses the second rolling bearing 9. The diameter of each bore 15, 16 corresponds to the outside diameter of the corresponding bearing 8, 9.

The step 18 formed at the boundary between the upper bore 15 and the cylindrical part 17 provides the first rolling bearing 8 with axial retention in a first (downwards) direction. Likewise, the step 19 formed at the boundary between the lower bore 16 and the cylindrical part 17 provides the second rolling bearing 9 with axial retention in a second direction which is the opposite direction to the first (namely upwards).

The axial retention of the first rolling bearing 8 in the second direction (upwards) is achieved by that face of the rotary drum which faces towards the static drum (the underside). More specifically, this underside is in contact with that part of the first rolling bearing 8 which is connected to the spindle 3.

The axial retention of the second rolling bearing 9 in the first direction (downwards) is achieved by an elastic ring 20, the top face of which comes into contact with that part of the second rolling bearing 9 which is connected to the spindle 3.

The (upwards) clamping of the second rolling bearing 9 by the elastic ring 20 therefore tends to reduce the distance between the elastic ring 20 and the rotary drum 2, and thus allows the rolling bearings 8, 9 to be secured in their respective bores 15, 16, without play.

Furthermore, in order to durably avoid any axial play in the rolling bearings, the elastic ring 20 and rotary drum 2 bear respectively on the rolling bearings 8, 9 on just part of the rolling bearing (in this particular instance, the part connected to the spindle as described hereinabove) and clamping is achieved with preload: the elastic ring 20 is mounted on the spindle 3 in contact with the second bearing 9 with preload, in this instance 18 N of preload.

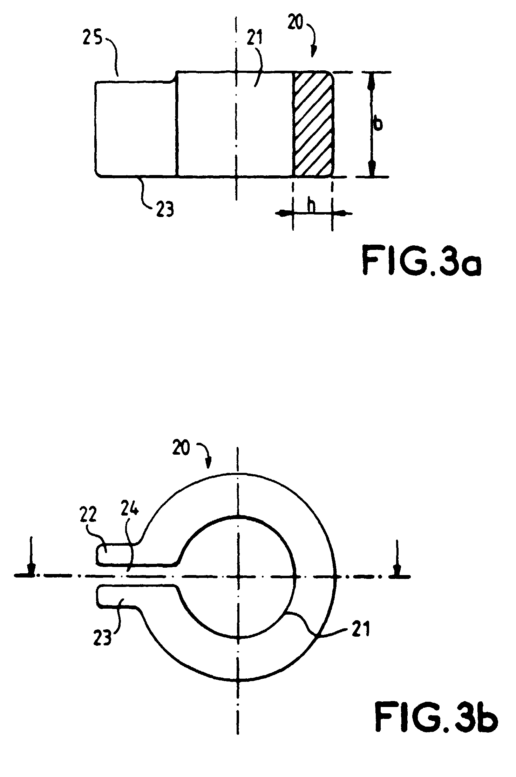

The elastic ring 20 and the way in which it is attached to the spindle 3 will now be described in detail with reference to Figures 3a and 3b.

The elastic ring 20 is made up of a hollow cylinder 21, over about 330° of its periphery, and of two parallel tabs 22, 23 which extend towards the outside of the cylinder 21. The space 24 between the two parallel tabs 22, 23 is empty and opens to the inside of the hollow cylinder 21. The space 24 thus forms a diametral passage 24 between the inside and the outside of the elastic ring 20, the width of which passage at rest is markedly smaller than the diameter of the spindle 3.

Furthermore, it may be noted that the height of the tabs (along the axis of the cylinder 21) is slightly less than the height of the cylinder 21. This then forms a clearance 25 which makes it possible to keep some distance between the elastic ring 20 and that part of the second bearing 9 which is connected to the static drum 1 so as to prevent any contact between these two parts and thus make sure that contact between the elastic ring 20 and the second bearing 9 is in the region of that part of the second bearing 9 that is connected to the spindle 3.

The clearance 25 also makes it possible, when made on just one side of the elastic ring 20 (the opposite face to the clearance 25 being planar), to determine which of the two faces of the elastic ring 20 is the one which has been produced with the accuracy necessary for contact between the elastic ring and the second bearing (namely the face which has the clearance 25). In this case, the elastic ring 20 has to be mounted with its face which has the clearance 25 facing towards the second bearing 9.

Alternatively, if it is desirable to be able to mount the elastic ring 20 either way up, it is possible to make the elastic ring 20 symmetric with respect to a plane perpendicular to the axis of the hollow cylinder 21. However, this entails producing the two faces of the elastic ring 20 with the accuracy necessary for contact between the elastic ring and the second bearing.

The inside diameter of the hollow cylinder 21 at rest (that is to say when the elastic ring 20 is not mounted on the spindle 3) is slightly smaller than the diameter of the spindle 3. Thus, the elastic ring 20 is under tension when mounted on the spindle 3. As a preference, the ratio between the diameter of the spindle 3 and the inside diameter of the hollow cylinder 21 at rest is between 1.01 and 1.05.

The elastic ring 20 is made of a metallic material, for example a Cr-Ni alloy (X 10 Cr Ni 18-8). It is also possible to envisage making the elastic ring out of plastic, for example DELRIN 100ST.

The elastic ring 20 is mounted on the spindle 3 as follows: the tabs 22, 23 are forced apart (in this instance the force being 2 N) until the distance between them is greater than the diameter of the spindle 3 (which effectively means that the passage 24 is widened to a width that exceeds the diameter of the spindle); the elastic ring 20 is then placed around the spindle 3; then the elastic ring 20 is brought into contact with the second bearing 9 with a force that represents the preload (18 N), the tabs 22, 23 being kept apart; finally, the tabs 22, 23 are released, with the preloading force maintained.

The dimensions of the elastic ring 20 are such that the elastic ring 20 is held on the spindle 3 by friction against the actions of the forces generated by the preload (18 N).

By way of example, for an elastic ring 20 made of X10CrNi 8.8 steel, the following dimensions make it possible to achieve a force of 1.14 N/mm² due to the deformation of the material, which force is capable of retaining the elastic ring 20 which, because of the 18 N preload, experiences a loading of 0.2 N/mm²: height b = 5 mm, section h = 2 mm, inside diameter = 5.93 mm.

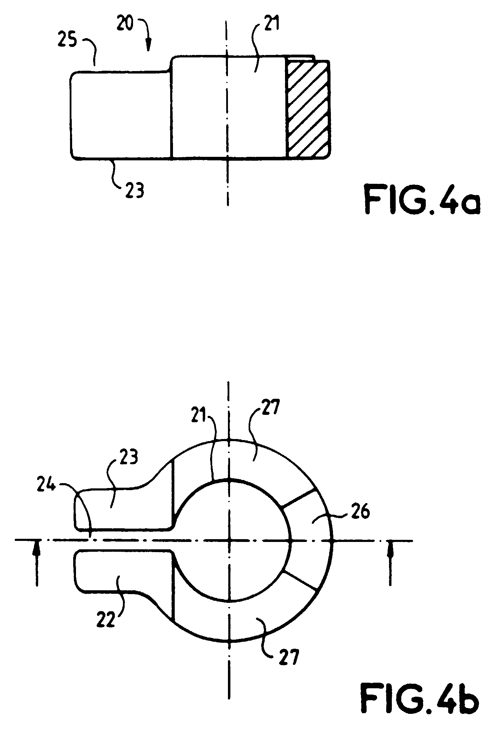

Another embodiment of the elastic ring 20 is depicted in Figures 4a and 4b. The elements which are similar to the previous embodiment will not be described again.

In its region opposite the tabs 22, 23, the elastic ring 20 has a recess 26. Thus, in this region, the elastic ring 20 will not come into contact with the second bearing 9. This characteristic makes it possible to simplify the production of the elastic ring by rolling around the axis of the hollow cylinder 21. In effect, the region opposite the tabs 22, 23 is conventionally difficult to produce accurately by rolling because this is the region which experiences the greatest deformation. By virtue of the recess 26, the tolerances in this region are very wide. The tighter tolerances associated with the contact between the elastic ring and the second bearing have to be achieved only in the middle regions 27 of the elastic ring 20 where they are easier to achieve.

It may be noted that the elastic ring 20 according to the invention allows the spindle 3 to be made in the form of a straight cylinder, that is to say a cylinder with no roughnesses or recesses, which makes it possible to reduce its cost to a minimum and also allows several successive mounting/demounting operations, for example if the upper drum is ever repaired.

The invention also applies to drum assemblies of other types, particularly those in which the spindle is secured to the static drum.

## Claims

1. Drum assembly, particularly for a system for recording and/or playing magnetic tapes, comprising a static drum (1) and a rotary drum (2), one of the drums (2) being secured to a spindle (3), the spindle (3) being mounted on the other drum (1) with the interposition of at least one ball bearing (8, 9), preloading means being provided for axially immobilizing the bearing (8, 9) with preload relative to the spindle (3), characterized in that the preloading means comprise an elastic ring (20) mounted under tension on the spindle (3) in such a way that contact between the elastic ring (20) and the spindle (3) generates frictional forces which allow the preload to be maintained.

2. Drum assembly according to Claim 1, wherein the elastic ring (20) has two tabs (22, 23) between which a diametral passage (24) between the inside and the outside of the elastic ring (20) is formed.

3. Drum assembly according to either of Claims 1 and 2, wherein the spindle (3) is a straight cylinder.

4. Drum assembly according to one of Claims 1 to 3, wherein the static drum (1) has a recess (14) through which the spindle (3) passes and wherein the rolling bearing (8, 9) is housed in a bore (15, 16) consisting of a widening of the recess (14).

5. System for recording and/or playing magnetic tapes comprising a drum assembly according to one of Claims 1 to 4.

6. Method for assembling a drum assembly according to Claim 2, comprising the following steps:
- the tabs (22, 23) are forced apart until the distance between them is greater than the diameter of the spindle (3);
- the elastic ring (20) is placed around the spindle (3), the tabs (22, 23) being kept apart;
- the elastic ring (20) is brought into contact with the rolling bearing (8, 9) with a preloading force, the tabs (22, 23) being kept apart;
- the tabs (22, 23) are released, with the preloading force maintained.
